(19) Europäisches Patentamt / European Patent Office / Office européen des brevets

(11) EP 3 614 617 A1

(12) DEMANDE DE BREVET EUROPEEN

(43) Date de publication:
26.02.2020 Bulletin 2020/09

(51) Int Cl.:
H04L 9/00 (2006.01)          H04L 9/30 (2006.01)
H04L 9/32 (2006.01)

(21) Numéro de dépôt: 19192215.2

(22) Date de dépôt: 19.08.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 20.08.2018 FR 1800888

(71) Demandeur: Thales
92400 Courbevoie (FR)

(72) Inventeurs:
• DUBOIS, Renaud
92622 GENNEVILLIERS CEDEX (FR)
• BERNARD, Olivier
92622 GENNEVILLIERS CEDEX (FR)

(74) Mandataire: Lavoix
2, place d'Estienne d'Orves
75441 Paris Cedex 09 (FR)

(54) PROCÉDÉ ET DISPOSITIF DE GÉNÉRATION DE PARAMÈTRE(S) D'UN PROTOCOLE CRYPTOGRAPHIQUE ASYMÉTRIQUE À PARTIR D'UNE BLOCKCHAIN, PROCÉDÉ ET APPAREIL DE CRYPTAGE OU DE DÉCRYPTAGE ET PROGRAMME D'ORDINATEUR ASSOCIÉS

(57) Ce procédé de génération de paramètre(s) d'un protocole cryptographique est mis en oeuvre par un dispositif électronique et comprend : la sélection (52) d'un haché (Ha) contenu dans un bloc d'une chaine de blocs ; l'initialisation (54) de la valeur d'un compteur (C) ; pour chaque paramètre, l'obtention (60) d'une valeur via la mise en oeuvre du calcul d'une opération appliquée au moins sur le haché sélectionné et la valeur du compteur pour obtenir un résultat, et d'une application d'une fonction de hachage cryptographique sur le résultat pour obtenir une valeur pour le paramètre ; le test (62) de la conformité de chaque valeur de paramètre, lorsqu'au moins une valeur n'est pas conforme, l'incrémentation (64) de la valeur du compteur par ajout d'un nombre entier et l'itération de l'obtention et du test, et lorsque chaque valeur est conforme, la génération (66) des paramètres avec chaque valeur conforme.

FIG.2

**EP 3 614 617 A1**

**Description**

La présente invention concerne un procédé de génération d'au moins un paramètre caractérisant un protocole cryptographique, le procédé étant mis en oeuvre par un dispositif électronique. L'invention se rapporte également à un procédé de cryptage ou de décryptage utilisant un protocole cryptographique, le protocole cryptographique étant caractérisé par au moins un paramètre généré via un tel procédé de génération.

L'invention concerne aussi un programme comportant des instructions logicielles qui, lorsqu'elles sont exécutées par un ordinateur, mettent en oeuvre un tel procédé de génération ou un tel procédé de cryptage ou de décryptage.

L'invention concerne également un dispositif électronique de génération d'au moins un paramètre caractérisant un protocole cryptographique. L'invention se rapporte aussi à un appareil électronique de cryptage ou de décryptage utilisant un protocole cryptographique, le protocole cryptographique étant caractérisé par au moins un paramètre généré via un tel dispositif électronique de génération.

L'invention concerne le domaine de la cryptographie. La cryptographie est scindée en deux parties distinctes : la cryptographie symétrique et la cryptographie asymétrique.

La cryptographie asymétrique permet de réaliser des protocoles d'échange de clés ou de signature électronique. Le chiffrement RSA (nommé par les initiales de ses trois inventeurs) est un algorithme de cryptographie asymétrique qui est lent et gourmand en temps de calcul.

Notamment pour remédier à un tel inconvénient, des protocoles cryptographiques, tels que les courbes elliptiques, ont été développés pour les protocoles d'échange. De fait, les courbes elliptiques sont intéressantes pour la cryptographie par l'existence sur le groupe $(E(\mathbb{F}_p),+)$ d'une loi d'addition et de multiplication par un scalaire. La loi de multiplication par un scalaire définit le problème dit du logarithme discret sur courbes elliptiques, consistant à retrouver le scalaire k à partir de [k]P et P. Ce problème est difficile à résoudre d'un point de vue calculatoire, c'est-à-dire que sa résolution n'est pas polynomiale en la taille en bits des éléments.

Pour assurer que le problème soit effectivement difficile, il convient que le protocole cryptographique, tel que la courbe elliptique considérée, soit considéré comme sûr.

Un protocole cryptographique, tel qu'une courbe elliptique, est considéré comme sûr si le protocole cryptographique est insensible à au moins une attaque parmi une attaque générique du type rho de Pollard, une attaque de type transfert, une attaque utilisant des endomorphismes issus de la multiplication complexe, et une attaque sur la courbe tordue (aussi désigné par le terme anglais de « *twist curve* »). Le protocole cryptographique est considéré comme rigide, si le procédé de génération du ou des paramètres caractérisant ce protocole est complètement explicite et ne comporte aucune étape arbitraire. La génération d'au moins un paramètre caractérisant un protocole cryptographique considéré comme sûr est donc difficile.

Le document FR 3 053 862 A1 décrit un tel procédé de génération d'au moins un paramètre caractérisant un protocole cryptographique, où le protocole cryptographique est considéré comme sûr.

Ce procédé de génération comprend le choix d'un texte et l'initialisation de la valeur d'un compteur à une valeur initiale. Il comprend ensuite, pour chaque paramètre, l'obtention d'une valeur du paramètre, par calcul d'une opération appliquée sur le texte et la valeur du compteur pour obtenir un résultat, puis par application d'une fonction de hachage cryptographique sur le résultat pour obtenir une valeur du paramètre, l'opération et la fonction de hachage cryptographique étant spécifiques dudit paramètre.

Toutefois, ce procédé de génération nécessite une phase d'agrément entre chaque utilisateur et le concepteur du protocole cryptographique. En effet, des utilisateurs pourraient contester le choix du texte, le concepteur pouvant itérer la génération de paramètres sur des textes différents.

Le but de l'invention est donc de proposer un procédé et un dispositif électronique de génération d'au moins un paramètre caractérisant un protocole cryptographique, permettant d'obtenir un protocole cryptographique considéré comme sûr, tout en évitant une phase d'agrément entre les utilisateurs et le concepteur du protocole cryptographique.

A cet effet, l'invention a pour objet un procédé de génération d'au moins un paramètre caractérisant un protocole cryptographique, le procédé étant mis en oeuvre par un dispositif électronique et comprenant les étapes suivantes :

- sélection d'un haché contenu dans un bloc d'une chaine de blocs d'informations, la chaine de blocs comportant un premier bloc et un ou plusieurs blocs successifs, chaque bloc autre que le premier bloc étant relié à un unique bloc précédent et contenant un haché du bloc précédent,
- initialisation de la valeur d'un compteur à une valeur initiale,
- pour chaque paramètre, obtention d'une valeur pour le paramètre, au moins une valeur pour le paramètre étant obtenue par mise en oeuvre des sous-étapes suivantes :

    + calcul d'une opération appliquée au moins sur le haché sélectionné et la valeur du compteur, pour obtenir un résultat,

+ application d'une fonction de hachage cryptographique sur le résultat pour obtenir une valeur pour le paramètre, l'opération et la fonction de hachage cryptographique étant spécifiques dudit au moins un paramètre,

- test de la conformité de chaque valeur de paramètre obtenue avec au moins un critère de conformité,

lorsqu'au moins une valeur n'est pas conforme avec ledit au moins un critère de conformité, incrémentation de la valeur du compteur par ajout d'un nombre entier et itération des étapes d'obtention et de test, et
lorsque chaque valeur est conforme avec le critère de conformité, génération des paramètres tels que chaque paramètre a pour valeur la valeur conforme avec ledit au moins un critère de conformité.

Le haché contenu dans un bloc d'une chaine de blocs d'informations (de l'anglais *blockchain*) est une source d'aléa publiquement vérifiable, la chaine de blocs d'informations est accessible depuis un réseau informatique, tel que le réseau Internet, et le procédé de génération selon l'invention ne requiert alors pas une phase d'agrément entre le concepteur et les utilisateurs du protocole cryptographique.

En outre, le fait que chaque bloc autre que le premier bloc soit relié à un unique bloc précédent et contienne un haché du bloc précédent limite fortement les risques de modification ou de suppression d'un bloc de la chaine, de sorte que chaque chaine de blocs est considérée comme authentique et sûre.

Suivant d'autres aspects avantageux de l'invention, le procédé de génération comprend une ou plusieurs des caractéristiques suivantes, prises isolément ou suivant toutes les combinaisons techniquement possibles :

- le protocole cryptographique est choisi parmi le groupe consistant en : une courbe elliptique, telle qu'une courbe elliptique conforme à la norme X9.62 ; une courbe appartenant à une famille de courbes paramétrée par au moins un paramètre ; un protocole d'échanges de clés ; et un protocole cryptographique post-quantique ;
- le critère de conformité est la vérification d'au moins un sous-critère, de préférence de plusieurs sous-critères, de préférence encore de tous les sous-critères, choisi(s) parmi le groupe consistant en :

    + insensibilité du protocole cryptographique à une attaque de type rho de Pollard ;
    + insensibilité du protocole cryptographique à une attaque de type transfert, telle qu'une insensibilité du protocole cryptographique à un transfert additif et à un transfert multiplicatif ;
    + insensibilité du protocole cryptographique à une attaque utilisant des endomorphismes issus de la multiplication complexe ; et
    + insensibilité du protocole cryptographique à une attaque sur une courbe tordue ;

- l'étape de test comporte une factorisation d'un premier nombre en nombres premiers pour vérifier au moins un critère de conformité, la factorisation étant mise en oeuvre sur l'ensemble des facteurs premiers inférieurs à un seuil, le critère de conformité étant vérifié lorsque le quotient du premier nombre par le produit de l'ensemble des facteurs premiers inférieurs au seuil est premier ;
- le procédé comprend en outre, préalablement à l'étape d'obtention, une étape de choix d'un texte et/ou d'une date de référence, et lors de la sous-étape de calcul au cours de l'étape d'obtention, l'opération est appliquée sur le haché sélectionné, la valeur du compteur et le texte et/ou la date de référence, pour obtenir ledit résultat,

la date de référence étant de préférence la date à laquelle le procédé est mis en oeuvre ;

- le texte vérifie au moins l'une des propriétés suivantes :

    + une première propriété selon laquelle le texte comporte plus de 16 caractères,
    + une deuxième propriété selon laquelle le texte comporte une date, telle que la date de référence ;

- les paramètres sont les paramètres d'une courbe elliptique, les paramètres étant un module, un premier coefficient et un ordre, dans lequel :

    + une valeur pour le module est obtenue par mise en oeuvre d'une étape de calcul d'une première opération appliquée sur le haché sélectionné et la valeur du compteur, pour obtenir un premier résultat et d'une étape d'application d'une première fonction de hachage cryptographique sur le premier résultat pour obtenir la valeur pour le module,
    + une valeur pour le premier coefficient est obtenue par mise en oeuvre d'une étape de calcul d'une deuxième opération appliquée sur le haché sélectionné et la valeur du compteur, pour obtenir un deuxième résultat et d'une étape d'application d'une deuxième fonction de hachage cryptographique sur le deuxième résultat pour obtenir la valeur pour le premier coefficient, et

+ une valeur de l'ordre est obtenue par mise en oeuvre d'une étape de détermination à partir des valeurs du module et du premier coefficient,

chaque opération comportant de préférence une concaténation du haché sélectionné et de la valeur du compteur ;
- en complément, lorsque le procédé comprend en outre, préalablement à l'étape d'obtention, une étape de choix d'un texte et/ou d'une date de référence, la valeur pour le module est obtenue par mise en oeuvre de l'étape de calcul de la première opération appliquée sur le haché sélectionné, la valeur du compteur et le texte et/ou la date de référence, et la valeur pour le premier coefficient est obtenue par mise en oeuvre de l'étape de calcul de la deuxième opération appliquée sur le haché sélectionné, la valeur du compteur et le texte et/ou la date de référence,

chaque opération comportant de préférence une concaténation du haché sélectionné, de la valeur du compteur et du texte et/ou de la date de référence ;

- les paramètres sont les paramètres d'une courbe elliptique, les paramètres étant un module, un premier coefficient, un deuxième coefficient et un ordre, dans lequel :

+ une valeur pour le module est obtenue par mise en oeuvre d'une étape de calcul d'une première opération appliquée sur le haché sélectionné et la valeur du compteur, pour obtenir un premier résultat et d'une étape d'application d'une première fonction de hachage cryptographique sur le premier résultat pour obtenir la valeur pour le module,
+ une valeur pour le premier coefficient est obtenue par mise en oeuvre d'une étape de calcul d'une deuxième opération appliquée sur le haché sélectionné et la valeur du compteur, pour obtenir un deuxième résultat et d'une étape d'application d'une deuxième fonction de hachage cryptographique sur le deuxième résultat pour obtenir la valeur pour le premier coefficient,
+ une valeur pour le deuxième coefficient est obtenue par mise en oeuvre d'une étape de calcul d'une troisième opération appliquée sur le haché sélectionné et la valeur du compteur, pour obtenir un troisième résultat et d'une étape d'application d'une troisième fonction de hachage cryptographique sur le troisième résultat pour obtenir une valeur pour le deuxième coefficient, et

- une valeur de l'ordre est obtenue par mise en oeuvre d'une étape de détermination à partir des valeurs du module, du premier coefficient et du deuxième coefficient,

chaque opération comportant de préférence une concaténation du haché sélectionné et de la valeur du compteur ;

- en complément, lorsque le procédé comprend en outre, préalablement à l'étape d'obtention, une étape de choix d'un texte et/ou d'une date de référence, la valeur pour le module est obtenue par mise en oeuvre de l'étape de calcul de la première opération appliquée sur le haché sélectionné, la valeur du compteur et le texte et/ou la date de référence, la valeur pour le premier coefficient est obtenue par mise en oeuvre de l'étape de calcul de la deuxième opération appliquée sur le haché sélectionné, la valeur du compteur et le texte et/ou la date de référence, et la valeur pour le deuxième coefficient est obtenue par mise en oeuvre de l'étape de calcul de la troisième opération appliquée sur le haché sélectionné, la valeur du compteur et le texte et/ou la date de référence,

chaque opération comportant de préférence une concaténation du haché sélectionné, de la valeur du compteur et du texte et/ou de la date de référence.

L'invention a également pour objet un procédé de cryptage ou de décryptage utilisant un protocole cryptographique, le protocole cryptographique étant caractérisé par au moins un paramètre généré via un procédé de génération tel que défini ci-dessus.

L'invention a également pour objet un programme d'ordinateur comportant des instructions logicielles qui, lorsqu'elles sont exécutées par un ordinateur, mettent en oeuvre un procédé de génération tel que défini ci-dessus ou un procédé de cryptage ou de décryptage tel que défini ci-dessus.

L'invention a également pour objet un dispositif électronique de génération d'au moins un paramètre caractérisant un protocole cryptographique, le dispositif comprenant :

- un module de sélection configuré pour sélectionner un haché contenu dans un bloc d'une chaine de blocs d'informations, la chaine de blocs comportant un premier bloc et un ou plusieurs blocs successifs, chaque bloc autre que le premier bloc étant relié à un unique bloc précédent et contenant un haché du bloc précédent,
- un module d'initialisation configuré pour initialiser la valeur d'un compteur à une valeur initiale,

- un module d'obtention configuré pour obtenir une valeur pour chaque paramètre, au moins une valeur pour le paramètre étant obtenue par :

  + calcul d'une opération appliquée au moins sur le haché sélectionné et la valeur du compteur, pour obtenir un résultat,
  + application d'une fonction de hachage cryptographique sur le résultat pour obtenir une valeur pour le paramètre, l'opération et la fonction de hachage cryptographique étant spécifiques dudit au moins un paramètre,

- un module de test configuré pour tester la conformité de chaque valeur de paramètre obtenue avec au moins un critère de conformité,
- un module d'incrémentation configuré pour, lorsqu'au moins une valeur n'est pas conforme avec ledit au moins un critère de conformité, incrémenter la valeur du compteur par ajout d'un nombre entier et itérer une mise en oeuvre des modules d'obtention et de test, et
- un module de génération configuré pour, lorsque chaque valeur est conforme avec le critère de conformité, générer des paramètres tels que chaque paramètre a pour valeur la valeur conforme avec ledit au moins un critère de conformité.

L'invention a également pour objet un appareil électronique de cryptage ou de décryptage utilisant un protocole cryptographique, le protocole cryptographique étant caractérisé par au moins un paramètre généré via un dispositif électronique de génération tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

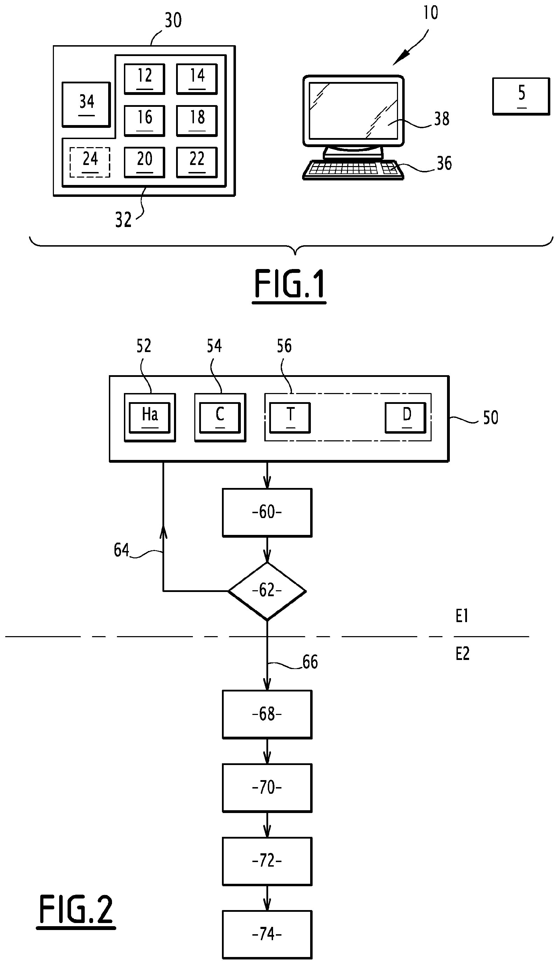

- la figure 1 est une représentation schématique d'un dispositif électronique, selon l'invention, de génération d'au moins un paramètre caractérisant un protocole cryptographique et d'un appareil électronique de cryptage ou de décryptage utilisant ensuite ledit protocole cryptographique ; et
- la figure 2 est une représentation schématique d'un ordinogramme d'un procédé, selon l'invention, de génération d'au moins un paramètre caractérisant un protocole cryptographique, puis d'un procédé de transmission du ou des paramètres en vue de l'utilisation dudit protocole cryptographique par un procédé de cryptage ou de décryptage.

Sur la figure 1, un appareil électronique de cryptage ou de décryptage 5 est configuré pour crypter ou de décrypter un message en utilisant un protocole cryptographique, le protocole cryptographique étant caractérisé par au moins un paramètre généré via un dispositif électronique de génération 10.

Le dispositif électronique de génération 10 est configuré pour générer au moins un paramètre caractérisant un protocole cryptographique.

Le protocole cryptographique est de manière générale tout type de protocole cryptographique reposant sur au moins un paramètre aléatoire.

Le protocole cryptographique est par exemple choisi parmi le groupe consistant en : une courbe elliptique, telle qu'une courbe elliptique conforme à la norme X9.62 ; une courbe appartenant à une famille de courbes paramétrée par au moins un paramètre ; un protocole d'échanges de clés ; et un protocole cryptographique post-quantique.

Les courbes elliptiques utilisées en cryptographie sont généralement données sous forme de Weierstrass. Ce sont l'ensemble des points d'un corps fini $\mathbb{F}_P$ vérifiant l'équation suivante :

$$y^2 = x^3 + A.x + B \quad mod\ P \qquad\qquad (1)$$

où :

- x et y sont des éléments du corps fini $\mathbb{F}_P$ ,
- P est le module,
- A est un premier coefficient, et
- B est un deuxième coefficient.

Pour chacune des courbes, un ensemble de paramètres permet de connaître la courbe. Dans l'exemple de l'équation (1), les paramètres sont le module P, le premier coefficient A et le deuxième coefficient B. Ces trois paramètres suffisent à caractériser la courbe elliptique.

Pour pouvoir échanger des informations sur un canal dit public, il est également utilisé dans le cadre de la cryptographie d'autres paramètres parmi lesquels les coordonnées du point de base de la courbe notées (x, y), l'ordre de la courbe Q ou le cofacteur H. Par définition, le cofacteur H est le rapport entre l'ordre Q et l'ordre du groupe engendré par le point de base (x,y) ; le point de base est choisi de telle sorte que ce cofacteur soit très petit.

En variante, les courbes elliptiques sont présentées sous d'autres formes que la forme de Weierstrass, et nécessitant une ou plusieurs constantes aléatoires. Par exemple, dispositif électronique de génération 10 est configuré pour générer au moins un paramètre caractérisant une courbe elliptique sous forme d'Edwards, de Jacobi, de Montgomery ou de Hessiennes. Typiquement, dans la formulation d'Edwards, au lieu de générer les deux coefficients A et B, il est généré un seul coefficient usuellement noté D selon laquelle une courbe elliptique s'écrit sous la forme :

$$x^2 + y^2 = 1 + D.x^2.y^2 \qquad\qquad (2)$$

où :

- x et y sont des éléments du corps fini $\mathbb{F}_P$ ,
- D est le coefficient.

Lorsque le protocole cryptographique est une courbe appartenant à une famille de courbes paramétrée par au moins un paramètre, la courbe est par exemple une courbe de la famille Barreto-Naehrig. Les courbes de la famille Barreto-Naehrig sont générées par l'évaluation de plusieurs polynômes en une seule variable aléatoire, la variable étant alors obtenue par mise en oeuvre du procédé de génération.

Lorsque le protocole cryptographique est un protocole cryptographique post-quantique, le protocole est par exemple celui décrit par les auteurs Bos, Costello, Naehrig et Stebila dans le document intitulé « Post-quantum key exchange for the TLS protocol from the ring learning with errors problem » issue d'un proceedings de la conférence IEEE Symposium on Security and Privacy (S&P) 2015. Un tel protocole cryptographique post-quantique implique une constante A, dont il faut pouvoir prouver que la génération n'a pas été dictée par des intentions malicieuses. Le dispositif électronique de génération 10 est alors configuré pour générer ladite constante A. Ce protocole est également un protocole d'échange de clés.

Le dispositif électronique de génération 10 comprend un module de sélection 12 configuré pour sélectionner un haché Ha contenu dans un bloc d'une chaine de blocs d'informations, non représentée, et un module d'initialisation 14 configuré pour initialiser la valeur d'un compteur C à une valeur initiale.

Le dispositif électronique de génération 10 comprend un module d'obtention 16 configuré pour obtenir une valeur pour chaque paramètre, au moins une valeur pour le paramètre étant obtenue par calcul d'une opération O appliquée au moins sur le haché sélectionné Ha et la valeur du compteur C, pour obtenir un résultat, puis par application d'une fonction de hachage cryptographique H sur le résultat pour obtenir une valeur pour le paramètre, l'opération O et la fonction de hachage cryptographique H étant spécifiques dudit au moins un paramètre.

Le dispositif électronique de génération 10 comprend un module de test 18 configuré pour tester la conformité de chaque valeur de paramètre obtenue avec au moins un critère de conformité.

Le dispositif électronique de génération 10 comprend un module d'incrémentation 20 configuré pour, lorsqu'au moins une valeur n'est pas conforme avec ledit au moins un critère de conformité, incrémenter la valeur du compteur C par ajout d'un nombre entier et itérer une mise en oeuvre des modules d'obtention 16 et de test 18 ; et un module de génération 22 configuré pour, lorsque chaque valeur est conforme avec le critère de conformité, générer des paramètres tels que chaque paramètre a pour valeur la valeur conforme avec ledit au moins un critère de conformité.

En complément facultatif, le dispositif électronique de génération 10 comprend un module de choix 22 configuré pour, préalablement à la mise en oeuvre du module d'obtention 16, choisir un texte T et/ou une date de référence D. Lors de la mise en oeuvre du module d'obtention 16, l'opération O est alors appliquée sur le haché sélectionné H, la valeur du compteur C, ainsi que le texte T et/ou la date de référence D, pour obtenir ledit résultat. La date de référence D est de préférence la date à laquelle la génération dudit au moins un paramètre caractérisant le protocole cryptographique est mise en oeuvre.

Dans l'exemple de la figure 1, le dispositif électronique de génération 10 comprend une unité de traitement d'informations 30 formée par exemple d'une mémoire 32 et d'un processeur 34 associé à la mémoire 32. Il comprend en outre dans cet exemple des moyens d'entrée/sortie 36, tel qu'un clavier et/ou une souris, et éventuellement un écran d'affichage 38.

Dans l'exemple de la figure 1, le module de sélection 12, le module d'initialisation 14, le module d'obtention 16, le module de test 18, le module d'incrémentation 20 et le module de génération 22, ainsi qu'en complément facultatif le module de choix 24, sont réalisés chacun sous forme d'un logiciel exécutable par le processeur 34. La mémoire 32 de l'unité de traitement d'informations 30 est alors apte à stocker un logiciel de sélection configuré pour sélectionner le haché Ha contenu dans le bloc de la chaine de blocs d'informations ; un logiciel d'initialisation configuré pour initialiser la valeur d'un compteur C à une valeur initiale ; un logiciel d'obtention configuré pour obtenir la valeur pour chaque paramètre, au moins une valeur pour le paramètre étant obtenue par calcul de l'opération O appliquée au moins sur le haché sélectionné Ha et la valeur du compteur C, pour obtenir le résultat, puis par application de la fonction de hachage cryptographique H sur le résultat pour obtenir la valeur pour le paramètre, l'opération O et la fonction de hachage cryptographique H étant spécifiques dudit au moins un paramètre. La mémoire 32 de l'unité de traitement d'informations 30 est apte à stocker un logiciel de test configuré pour tester la conformité de chaque valeur de paramètre obtenue avec au moins un critère de conformité ; un logiciel d'incrémentation configuré pour, lorsqu'au moins une valeur n'est pas conforme avec ledit au moins un critère de conformité, incrémenter la valeur du compteur C par ajout d'un nombre entier et itérer une mise en oeuvre des logiciels d'obtention et de test ; et un logiciel de génération configuré pour, lorsque chaque valeur est conforme avec le critère de conformité, générer des paramètres tels que chaque paramètre a pour valeur la valeur conforme avec ledit au moins un critère de conformité. En complément facultatif, la mémoire 32 de l'unité de traitement d'informations 30 est apte à stocker un logiciel de choix configuré pour, préalablement à la mise en oeuvre du logiciel d'obtention, choisir le texte T et/ou la date de référence D. Lors de la mise en oeuvre du logiciel d'obtention, l'opération O est alors appliquée sur le haché sélectionné H, la valeur du compteur C, ainsi que le texte T et/ou la date de référence D, pour obtenir ledit résultat. Le processeur 34 est alors apte à exécuter le logiciel de sélection, le logiciel d'initialisation, le logiciel d'obtention, le logiciel de test, le logiciel d'incrémentation et le logiciel de génération, ainsi qu'en complément facultatif le logiciel de choix.

En variante non représentée, le module de sélection 12, le module d'initialisation 14, le module d'obtention 16, le module de test 18, le module d'incrémentation 20 et le module de génération 22, ainsi qu'en complément facultatif le module de choix 24, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif électronique de génération 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de sélection 12 est configuré pour sélectionner le haché Ha contenu dans un bloc respectif de la chaine de blocs, ledit bloc contenant le haché Ha étant n'importe quel bloc de la chaine de blocs. Autrement dit, le haché sélectionné Ha est un élément imprédictible par une personne autre que le concepteur, notamment par l'utilisateur, et de manière générale par un tiers.

En complément facultatif, le module de sélection 12 est configuré pour sélectionner plusieurs hachés Ha, chacun étant contenu dans un bloc respectif d'une chaine de blocs correspondante.

Chaque chaine de blocs (de l'anglais *blockchain*) comporte un premier bloc et un ou plusieurs blocs successifs, chaque bloc autre que le premier bloc étant relié à un unique bloc précédent et contenant un haché du bloc précédent.

Chaque chaine de blocs d'informations est accessible depuis un réseau informatique, en particulier depuis le réseau Internet, et la valeur du haché utilisé pour la génération du ou des paramètres caractérisant le protocole cryptographique est alors facilement vérifiable par un utilisateur dudit protocole, et de manière générale par un tiers. Chaque haché sélectionné Ha est alors une source d'aléa publiquement vérifiable.

Chaque chaine de blocs d'informations est de préférence une chaine de blocs associée à une cybermonnaie, également appelée cryptomonnaie, telle que la cybermonnaie Bitcoin, la cybermonnaie Ether, etc. A titre d'exemple, pour la chaine de blocs associée à la cybermonnaie Bitcoin, chaque haché est contenu dans un champ appelé BlockHash, et la fonction de hachage utilisée pour calculer chaque haché d'un bloc précédent est un algorithme de type SHA (de l'anglais *Secure Hash Algorithm*), en particulier l'algorithme SHA-256. Pour la chaine de blocs associée à la cybermonnaie Ether, chaque haché est contenu dans un champ appelé MixHash, et la fonction de hachage utilisée pour calculer chaque haché d'un bloc précédent est un algorithme Ethash, basé sur un algorithme de type SHA, en particulier l'algorithme SHA-3.

Le module d'initialisation 14 est configuré pour initialiser le compteur C à une valeur initiale, par exemple la valeur 1.

Le module d'obtention 16 est configuré pour obtenir une valeur pour chaque paramètre, par calcul de l'opération O appliquée au moins sur le haché sélectionné Ha et la valeur du compteur C, et en complément facultatif sur le texte T et/ou la date D, pour obtenir le résultat R, puis par application de la fonction de hachage cryptographique H sur le résultat R pour obtenir une valeur pour le paramètre.

L'opération O appliquée sur le haché sélectionné Ha et la valeur du compteur C, voire appliquée à la fois sur le haché sélectionné Ha, la valeur du compteur C, le texte T et/ou la date D, est une opération bijective.

L'opération O appliquée est de préférence une concaténation, c'est-à-dire une concaténation du haché sélectionné Ha et de la valeur du compteur C, voire en outre du texte T et/ou de la date. Une concaténation consiste à mettre bout à bout deux chaînes de caractère, telles que la chaine de de caractère correspondant au haché sélectionné Ha et celle correspondant à la valeur du compteur C. En variante, l'opération O appliquée est une multiplication, ou encore une addition.

L'entité sur laquelle est appliquée ladite opération O pour obtenir le résultat R est également appelée graine. Autrement dit, la graine comporte le haché sélectionné Ha et la valeur du compteur C. En complément facultatif, la graine comporte un ou plusieurs hachés sélectionnés Ha, la valeur du compteur C, le texte T et/ou la date D.

La fonction de hachage cryptographique H appliquée ensuite sur le résultat R pour obtenir une valeur du paramètre est par exemple un algorithme de type SHA, tel que l'un des algorithmes SHA-256, SHA-384, SHA-512, SHA-512/256 et SHA-512/224, ou l'algorithme SHA-3.

Le module de test 18 est configuré pour tester la conformité de chaque valeur de paramètre obtenue avec au moins un critère de conformité.

Le critère de conformité est par exemple la vérification d'au moins un sous-critère choisi parmi le groupe consistant en :

- insensibilité du protocole cryptographique à une attaque de type rho de Pollard ;
- insensibilité du protocole cryptographique à une attaque de type transfert, telle qu'une insensibilité du protocole cryptographique à un transfert additif et à un transfert multiplicatif ;
- insensibilité du protocole cryptographique à une attaque utilisant des endomorphismes issus de la multiplication complexe ; et
- insensibilité du protocole cryptographique à une attaque sur une courbe tordue (de l'anglais *twist curve*).

Le critère de conformité est de préférence la vérification de plusieurs sous-critères du groupe défini ci-dessus, de préférence encore la vérification de chacun des sous-critères dudit groupe.

Autrement dit, le module de test 18 est de préférence configuré pour vérifier si le protocole cryptographique caractérisé par la ou les valeurs de paramètre obtenues est insensible à l'attaque de type rho de Pollard, à l'attaque de type transfert, à l'attaque utilisant des endomorphismes issus de la multiplication complexe, ou à l'attaque sur la courbe tordue, de préférence insensible à plusieurs de ces attaques, de préférence encore insensible à chacune de ces attaques.

En variante ou en complément, le module de test 18 est de configuré pour factoriser d'un premier nombre en nombres premiers pour vérifier au moins un critère de conformité, la factorisation étant mise en oeuvre sur l'ensemble des facteurs premiers inférieurs à un seuil, le critère de conformité étant alors vérifié lorsque le quotient du premier nombre par le produit de l'ensemble des facteurs premiers inférieurs au seuil est premier.

A l'issue du test mis en oeuvre par le module de test 18, lorsqu'au moins une valeur n'est pas conforme avec ledit au moins un critère de conformité, le module d'incrémentation 20 est configuré pour incrémenter la valeur du compteur C par ajout d'un nombre entier, tel que le nombre entier égal à 1, et itérer une mise en oeuvre des modules d'obtention 16 et de test 18.

Sinon, lorsque chaque valeur est conforme avec le critère de conformité, le module de génération 22 est configuré pour générer le ou les paramètres caractérisant le protocole cryptographique, tels que chaque paramètre a pour valeur la valeur conforme avec ledit au moins un critère de conformité.

En complément facultatif, le module de choix 22 est configuré pour choisir le texte T et/ou la date de référence D à inclure en outre dans la graine. Le texte choisi T comporte de préférence plus de 16 caractères. Le texte T est par exemple un texte propriétaire de la personne générant les paramètres, par exemple, un extrait d'une licence d'un produit vendu par cette personne.

Afin d'améliorer la rigidité du processus proposé, il est recommandé que le texte choisi T soit intelligible et permette d'identifier celui qui en revendique la propriété ou le contexte d'utilisation.

En variante ou en complément, la graine comporte également des données relatives à la date de mise en oeuvre du procédé. La graine comporte alors la date de référence D choisie via le module de choix 22, la date de référence D étant de préférence la date à laquelle le procédé de génération est mis en oeuvre.

En complément facultatif encore, le module de choix 22 est configuré pour concaténer une partie du texte T et la date de référence D. Selon un autre exemple, le texte T lui-même comporte la date de référence D. A titre d'illustration, le texte est « *Cette courbe a été générée à telle date* ».

Le fonctionnement du dispositif électronique de génération 10 selon l'invention va être à présent expliqué en regard de la figure 2 représentant un ordinogramme du procédé de de génération selon l'invention, suivi d'une transmission du ou des paramètres en vue de l'utilisation dudit protocole cryptographique par un procédé de cryptage ou de décryptage.

Le procédé de génération comporte une phase initiale 50 de fourniture de la graine, la phase de fourniture 50 comportant une étape 52 de sélection d'un ou plusieurs hachés Ha, chacun étant contenu dans un bloc respectif d'une chaine de blocs correspondante, une étape 54 d'initialisation du compteur C à une valeur initiale, telle que la valeur 1, ainsi qu'une étape optionnelle 56, représentée alors en trait pointillé à la figure 2, de choix du texte T et/ou de la date de référence D à inclure en outre dans la graine.

Après la phase de fourniture 50 initiale, le procédé de génération comporte une étape 60 d'obtention d'au moins une valeur pour chaque paramètre, via la mise en oeuvre, pour chaque paramètre, des sous-étapes suivantes, non représentées :

+ calcul de l'opération O appliquée sur la graine comportant le haché sélectionné Ha et la valeur du compteur C, pour obtenir le résultat R,

+ application de la fonction de hachage cryptographique H sur le résultat R pour obtenir une valeur dudit paramètre, l'opération O et la fonction de hachage cryptographique H étant spécifiques dudit au moins un paramètre.

A titre d'exemple, afin de générer trois paramètres distincts caractérisant le protocole cryptographique, tels que le module P, le premier coefficient A et le deuxième coefficient B caractérisant une courbe elliptique respective, l'étape d'obtention 60 comporte trois sous-étapes de calcul et trois sous-étapes d'application.

A la première sous-étape de calcul, une première opération $O_1$ est appliquée sur la graine, comportant notamment le haché sélectionné Ha et la valeur du compteur C, pour obtenir un premier résultat $R_1$. Selon l'exemple décrit, la première opération $O_1$ est une concaténation du haché sélectionné Ha, de la valeur du compteur C et d'une première constante $C_1$.

A la deuxième sous-étape de calcul, une deuxième opération $O_2$ est appliquée sur la graine, comportant notamment le haché sélectionné Ha et la valeur du compteur C, pour obtenir un deuxième résultat $R_2$ distinct du premier résultat $R_1$. Selon l'exemple décrit, la deuxième opération $O_2$ est une concaténation du haché sélectionné Ha, de la valeur du compteur C et d'une deuxième constante $C_2$ distincte de la première constante $C_1$.

A la troisième sous-étape de calcul, une troisième opération $O_3$ est appliquée sur la graine, comportant notamment le haché sélectionné Ha et la valeur du compteur C, pour obtenir un troisième résultat $R_3$. Selon l'exemple décrit, la troisième opération $O_3$ est une concaténation du haché sélectionné Ha, de la valeur du compteur C et d'une troisième constante $C_3$ distincte de la première constante $C_1$ et distincte de la deuxième constante $C_2$.

Dans chacun des exemples décrits, il apparaît que chaque opération $O_1$, $O_2$ et $O_3$ comporte une concaténation du haché sélectionné Ha, de la valeur du compteur C et d'une constante spécialisant de manière unique chaque sortie.

A la première sous-étape d'application, il est appliqué une première fonction de hachage cryptographique $H_1$ sur le premier résultat $R_1$ pour obtenir une valeur pour le module P. Dans le cas illustré, la valeur obtenue pour le module P est égale à la valeur en hexadécimal du résultat obtenu par application de la première fonction de hachage cryptographique $H_1$ sur le premier résultat $R_1$.

A la deuxième sous-étape d'application, il est appliqué une deuxième fonction de hachage cryptographique $H_2$ sur le deuxième résultat $R_2$ pour obtenir une valeur pour le premier coefficient A. Selon l'exemple illustré, la première fonction de hachage cryptographique $H_1$ et la deuxième fonction de hachage cryptographique $H_2$ sont identiques.

En outre, similairement à la première sous-étape d'application, la valeur obtenue pour le premier coefficient A est égale à la valeur en hexadécimal du résultat obtenu par application de la deuxième fonction de hachage cryptographique $H_2$ sur le deuxième résultat $R_2$.

A la troisième sous-étape d'application, il est appliqué une troisième fonction de hachage cryptographique $H_3$ sur le troisième résultat $R_3$ pour obtenir une valeur pour le deuxième coefficient B. Selon l'exemple illustré, la première fonction de hachage cryptographique $H_1$ et la troisième fonction de hachage cryptographique $H_3$ sont identiques.

En outre, similairement à la première sous-étape d'application, la valeur obtenue pour le deuxième coefficient B est égale à la valeur en hexadécimal du résultat obtenu par application de la troisième fonction de hachage $H_3$ sur le troisième résultat $R_3$.

Lors d'une sous-étape complémentaire de détermination, incluse dans l'étape d'obtention 60, il est déterminé la valeur de l'ordre Q correspondant aux valeurs du module P, du premier coefficient A et du deuxième coefficient B.

Une telle valeur de l'ordre Q est déterminée, par exemple, par utilisation de l'algorithme de Schoof ou sa version améliorée par Elkies et Atkin, également appelée algorithme SEA.

Le procédé de génération comporte, après l'étape d'obtention 60, une étape 62 de test de la conformité de chaque valeur de paramètre obtenue avec au moins un critère de conformité, c'est-à-dire dans l'exemple décrit ci-dessus, un test de la conformité des valeurs du module P, du premier coefficient A, du deuxième coefficient B et de l'ordre Q.

Les valeurs du module P, du premier coefficient A, du deuxième coefficient B et de l'ordre Q sont considérées comme conformes si les valeurs du module P, du premier coefficient A, du deuxième coefficient B et de l'ordre Q vérifient au moins un critère de conformité.

Par exemple, le critère de conformité est choisi pour que le protocole cryptographique, telle que la courbe elliptique obtenue à partir des valeurs du module P, du premier coefficient A, du deuxième coefficient B et de l'ordre Q, soit sûr.

A titre d'exemple, le critère de sûreté précédent est rempli dès que le ou les paramètres du protocole cryptographique, telles que les valeurs du module P, du premier coefficient A, du deuxième coefficient B et de l'ordre Q pour la courbe elliptique sous forme de Weierstrass, vérifient un ou plusieurs des sous-critères décrits ci-après, et de préférence chacun de ces sous-critères.

Selon un premier sous-critère, le protocole cryptographique, tel que la courbe elliptique, est insensible à une attaque du rho de Pollard.

Par exemple, selon le premier sous-critère, la taille du sous-groupe Q est supérieure à deux fois le niveau de sécurité.

Le niveau de sécurité dépend de l'application visée et constitue un objectif à atteindre. Concrètement, le niveau de sécurité correspond au logarithme du nombre minimal d'opérations qu'il est nécessaire de faire pour casser le système. A titre d'exemple, pour les applications civiles, 128 bits de sécurité sont recommandés.

Selon un deuxième sous-critère, le protocole cryptographique, tel que la courbe elliptique, est insensible à un transfert additif et un transfert multiplicatif. Par exemple, une expression du deuxième sous-critère est que $P^k = 1 \ [Q]$ implique que k est un nombre entier supérieur ou égal à 30. Le nombre k est appelé degré de plongement de la courbe considérée.

Selon un troisième sous-critère, le protocole cryptographique, tel que la courbe elliptique, est insensible à une attaque utilisant des endomorphismes issus de la multiplication. Par exemple, une expression du troisième sous-critère est d'imposer que le discriminant soit supérieur à une valeur seuil. Par discriminant, il est entendu ici la valeur absolue de la partie sans facteurs carrés de $((P+1-Q)^2 - 4*P)$.

Selon un quatrième sous-critère, le protocole cryptographique, tel que la courbe elliptique, est insensible à une attaque qui consiste à injecter une faute dans l'exécution du calcul pour forcer le calcul à converger vers la courbe tordue (de l'anglais « *twist curve* ») de la courbe initiale. L'équation de la courbe tordue est donnée par :

$$D.y^2 = x^3 + A.x + B \quad mod\ P \tag{1}$$

où :

- D est un élément du corps fini $\mathbb{F}_p$ n'admettant pas de racine carrée,
- x et y sont des éléments du corps fini $\mathbb{F}_P$ ,
- P est le module,
- A est un premier coefficient, et
- B est un deuxième coefficient.

En variante, le critère de sûreté précédent est rempli dès que le ou les paramètres du protocole cryptographique, telles que les valeurs du module P, du premier coefficient A, du deuxième coefficient B et de l'ordre Q pour la courbe elliptique sous forme de Weierstrass, vérifient toute combinaison des sous-critères évoqués précédemment.

En variante ou en complément, l'étape de test de conformité implique une factorisation d'un premier nombre en nombres premiers pour vérifier au moins un critère. La factorisation est mise en oeuvre sur l'ensemble des facteurs premiers inférieurs à un seuil, le critère de conformité associé étant vérifié lorsque le quotient du premier nombre par le produit de l'ensemble des facteurs premiers inférieurs au seuil est premier.

Par exemple, pour tester que l'ordre de la courbe tordue comporte au moins un facteur premier supérieur à $2^{100}$, on commence par extraire tous les facteurs premiers jusqu'à $2^{80}$ par la méthode ECM (aussi appelée factorisation de Lenstra pour les courbes elliptiques). Si le résidu est premier et vérifie le critère de conformité, la courbe est déclarée sûre vis-à-vis du critère, sinon, si le résidu est composite ou inférieur au seuil, la courbe est rejetée.

Selon l'exemple décrit, le critère de conformité est vérifié si l'ensemble des sous-critères suivants est vérifié :

- le module P est un nombre premier, et est compris entre $2^{L-1}$ et $2^L$ ;
- l'ordre Q est un nombre premier, et est compris entre $2^{L-1}$ et $2^L$ ;
- le degré de plongement de la courbe et le degré de plongement de la courbe tordue sont supérieurs à $2^{100}$ ;
- l'ordre de la courbe tordue comporte au moins un facteur premier supérieur à $2^{100}$, et
- le discriminant de la courbe est supérieur à $2^{100}$.

Lorsqu'à l'issue de l'étape de test 62, au moins une valeur de paramètre obtenue n'est pas conforme avec ledit au moins un critère de conformité, le procédé de génération comprend une étape (représentée par la flèche 64) d'incrémentation de la valeur du compteur C par ajout d'un nombre entier, tel que le nombre entier égal à 1, et d'itération des étapes d'obtention 60 et de test 62.

Lorsqu'à l'issue de l'étape de test 62, chaque valeur de paramètre obtenue est conforme avec le critère de conformité, le procédé de génération comprend alors une étape (représentée par la flèche 66) de génération des paramètres tels que chaque paramètre a pour valeur la valeur conforme avec ledit au moins un critère de conformité.

Autrement dit, les étapes d'obtention 60 et de test 62 sont itérées tant que la ou les valeurs obtenues de paramètre(s) du protocole cryptographique ne sont pas conformes au critère de conformité.

En d'autres termes, le ou les paramètres générés à l'issue du procédé de génération sont les premières valeurs du ou desdits paramètres vérifiant le critère de conformité.

Une fois le ou les paramètre(s) du protocole cryptographique, tels que le module P, le premier coefficient A, le deuxième coefficient B et l'ordre Q, générés par le procédé de génération selon l'invention, le point de base est apte à être choisi comme étant le point de coordonnées (x,y) de la courbe d'abscisse x la plus petite et d'ordonnée y paire tel que l'ordre du point de coordonnées (x,y) est q. De préférence, le point est choisi de manière non arbitraire.

Des tests effectués montrent que le calcul converge avec de l'ordre de quelques fois $L^2$ itérations. Plusieurs courbes ont ainsi été générées grâce à ce procédé de génération selon l'invention, et pour différents niveaux de sécurité.

Le procédé de génération permet alors de générer de multiples protocoles cryptographiques, tels que des courbes elliptiques, sûrs de manière prouvée complètement rigide, tout en ne nécessitant pas une phase d'agrément entre les utilisateurs et le concepteur du protocole cryptographique.

En outre, les protocoles cryptographiques sont reliés au(x) haché(s) Ha, voire au texte T, qui permet d'authentifier le protocole cryptographique, ce qui permet d'envisager facilement un changement périodique des protocoles cryptographiques, par exemple par un changement périodique d'au moins un haché Ha et/ou du texte T.

En complément encore, le changement périodique est par exemple appliqué via un changement périodique de la date de référence D. Cela permet également d'éviter son rejeu. Cela signifie qu'un attaquant ne peut pas forcer l'actualisation avec un protocole obsolète (passé pour légitime), puisqu'il ne contrôle pas la date de référence D, qui est dérivée d'une horloge de confiance.

En outre, l'unicité obtenue par la génération permet la compression de la transmission des paramètres, de sorte qu'il suffit par exemple de transmettre la valeur du compteur C et la valeur de l'ordre Q pour obtenir la courbe elliptique.

Ceci apparaît schématiquement dans un deuxième espace E2 de la figure 2, associé à l'utilisation du ou des paramètres générés par le procédé de génération selon l'invention, un premier espace E1 associé aux étapes 50 à 66 correspondant à la génération du ou des paramètres.

Lors d'une étape 68, la valeur du compteur C et la valeur de l'ordre Q sont transmis à l'utilisateur.

A l'étape 70, le ou les hachés sélectionnés Ha, voire en complément facultatif le texte T et/ou la date de référence D, sont fournis.

Ainsi que l'illustrent schématiquement les étapes 72 et 74, il est réappliqué les mêmes étapes qu'à la construction, sauf qu'ici la bonne valeur du compteur C est connue. Ainsi, chaque opération O, telles que les opérations $O_1$, $O_2$ et $O_3$ dans l'exemple des paramètres P, A et B de la courbe elliptique, est appliquée pour obtenir des résultats intermédiaires R à l'étape 72, puis chaque fonction de hachage cryptographique H, telles que les fonctions de hachage cryptographique $H_1$, $H_2$ et $H_3$ dans l'exemple des paramètres P, A et B de la courbe elliptique, est appliquée au résultat intermédiaire R respectif pour obtenir, à l'étape 74, le paramètre correspondant du protocole cryptographique, tels que le module P, le premier coefficient A et le deuxième coefficient B de la courbe elliptique.

La transmission est ainsi plus aisée puisque seules la valeur du compteur C et la valeur de l'ordre Q sont transmises. Il est à noter que la transmission de l'ordre Q évite simplement à l'utilisateur de recalculer l'ordre de la courbe.

En outre, selon une variante plus élaborée, il suffit de transmettre, en sus de la valeur du compteur C, la trace de la courbe définie comme la quantité (P+1-Q), sur seulement L/2 bits.

De fait, en exploitant la borne de Hasse, il apparaît que la différence entre (P+1) et Q est bornée en valeur absolue par deux fois la racine de P. Ainsi, la valeur du compteur permet d'obtenir le module P, et les L/2 bits de la trace permettent de déduire tous les bits de l'ordre Q.

Selon cette variante, la transmission de l'intégralité des paramètres du protocole cryptographique du concepteur vers l'utilisateur nécessite seulement L/2 + 48 bits, L étant la longueur en bits de l'ordre Q et 48 le nombre de bits associés à la valeur du compteur C.

Le protocole cryptographique ainsi déterminé via la génération du ou des paramètres le caractérisant est utilisable pour de multiples applications cryptographiques, comme des postes de radio, des systèmes de repérage ou encore des récepteurs de géolocalisation.

On conçoit ainsi que le dispositif électronique de génération 10 et le procédé de génération selon l'invention permettent d'obtenir un protocole cryptographique considéré comme sûr, tout ne nécessitant pas une phase d'agrément entre l'utilisateur et le concepteur du protocole cryptographique.

**Revendications**

1. Procédé de génération d'au moins un paramètre (P, A, B) caractérisant un protocole cryptographique, le procédé étant mis en oeuvre par un dispositif électronique (10) et comprenant les étapes suivantes :

   - sélection (52) d'un haché (Ha) contenu dans un bloc d'une chaine de blocs d'informations, la chaine de blocs comportant un premier bloc et un ou plusieurs blocs successifs, chaque bloc autre que le premier bloc étant relié à un unique bloc précédent et contenant un haché du bloc précédent,
   - initialisation (54) de la valeur d'un compteur (C) à une valeur initiale,
   - pour chaque paramètre (P, A, B), obtention (60) d'une valeur pour le paramètre (P, A, B), au moins une valeur pour le paramètre (P, A, B) étant obtenue par mise en oeuvre des sous-étapes suivantes :

      + calcul d'une opération appliquée au moins sur le haché (Ha) sélectionné et la valeur du compteur (C), pour obtenir un résultat (R),
      + application d'une fonction de hachage cryptographique (H) sur le résultat (R) pour obtenir une valeur pour le paramètre (P, A, B), l'opération (O) et la fonction de hachage cryptographique (H) étant spécifiques dudit au moins un paramètre,

   - test (62) de la conformité de chaque valeur de paramètre (P, A, B) obtenue avec au moins un critère de conformité,

   lorsqu'au moins une valeur n'est pas conforme avec ledit au moins un critère de conformité, incrémentation (64) de la valeur du compteur (C) par ajout d'un nombre entier et itération des étapes d'obtention et de test, et
   lorsque chaque valeur est conforme avec le critère de conformité, génération (66) des paramètres (P, A, B) tels que chaque paramètre (P, A, B) a pour valeur la valeur conforme avec ledit au moins un critère de conformité.

2. Procédé selon la revendication 1, dans lequel le protocole cryptographique est choisi parmi le groupe consistant en : une courbe elliptique, telle qu'une courbe elliptique conforme à la norme X9.62 ; une courbe appartenant à une famille de courbes paramétrée par au moins un paramètre ; un protocole d'échanges de clés ; et un protocole cryptographique post-quantique.

3. Procédé selon la revendication 1 ou 2, dans lequel le critère de conformité est la vérification d'au moins un sous-critère, de préférence de plusieurs sous-critères, de préférence encore de tous les sous-critères, choisi(s) parmi le groupe consistant en :

   - insensibilité du protocole cryptographique à une attaque de type rho de Pollard ;
   - insensibilité du protocole cryptographique à une attaque de type transfert, telle qu'une insensibilité du protocole cryptographique à un transfert additif et à un transfert multiplicatif ;
   - insensibilité du protocole cryptographique à une attaque utilisant des endomorphismes issus de la multiplication complexe ; et
   - insensibilité du protocole cryptographique à une attaque sur une courbe tordue.

4. Procédé selon la revendication 1 ou 2, dans lequel, l'étape de test (62) comporte une factorisation d'un premier nombre en nombres premiers pour vérifier au moins un critère de conformité, la factorisation étant mise en oeuvre sur l'ensemble des facteurs premiers inférieurs à un seuil, le critère de conformité étant vérifié lorsque le quotient du premier nombre par le produit de l'ensemble des facteurs premiers inférieurs au seuil est premier.

5. Procédé selon l'une quelconque des revendications précédentes, dans lequel le procédé comprend en outre, préalablement à l'étape d'obtention, une étape (56) de choix d'un texte (T) et/ou d'une date de référence (D), et lors de la sous-étape de calcul au cours de l'étape d'obtention, l'opération (O) est appliquée sur le haché (Ha) sélectionné, la valeur du compteur (C) et le texte (T) et/ou la date de référence (D), pour obtenir ledit résultat (R), la date de référence (D) étant de préférence la date à laquelle le procédé est mis en oeuvre.

6. Procédé selon la revendication 5, dans lequel, le texte (T) vérifie au moins l'une des propriétés suivantes :

   - une première propriété selon laquelle le texte (T) comporte plus de 16 caractères,
   - une deuxième propriété selon laquelle le texte (T) comporte une date, telle que la date de référence (D).

**7.** Procédé de cryptage ou de décryptage utilisant un protocole cryptographique, le protocole cryptographique étant **caractérisé par** au moins un paramètre (P, A, B) généré via le procédé de génération selon l'une quelconque des revendications précédentes.

**8.** Programme d'ordinateur comportant des instructions logicielles qui, lorsqu'elles sont exécutées par un ordinateur, mettent en oeuvre un procédé selon l'une quelconque des revendications précédentes.

**9.** Dispositif électronique (10) de génération d'au moins un paramètre (P, A, B) caractérisant un protocole cryptographique, le dispositif (10) comprenant :

- un module de sélection (12) configuré pour sélectionner un haché (Ha) contenu dans un bloc d'une chaine de blocs d'informations, la chaine de blocs comportant un premier bloc et un ou plusieurs blocs successifs, chaque bloc autre que le premier bloc étant relié à un unique bloc précédent et contenant un haché du bloc précédent,
- un module d'initialisation (14) configuré pour initialiser la valeur d'un compteur (C) à une valeur initiale,
- un module d'obtention (16) configuré pour obtenir une valeur pour chaque paramètre (P, A, B), au moins une valeur pour le paramètre (P, A, B) étant obtenue par :

+ calcul d'une opération (O) appliquée au moins sur le haché (Ha) sélectionné et la valeur du compteur (C), pour obtenir un résultat (R),
+ application d'une fonction de hachage cryptographique (H) sur le résultat (R) pour obtenir une valeur pour le paramètre (P, A, B), l'opération (O) et la fonction de hachage cryptographique (H) étant spécifiques dudit au moins un paramètre,

- un module de test (18) configuré pour tester la conformité de chaque valeur de paramètre (P, A, B) obtenue avec au moins un critère de conformité,
- un module d'incrémentation (20) configuré pour, lorsqu'au moins une valeur n'est pas conforme avec ledit au moins un critère de conformité, incrémenter la valeur du compteur (C) par ajout d'un nombre entier et itérer une mise en oeuvre des modules d'obtention (16) et de test (18), et
- un module de génération (22) configuré pour, lorsque chaque valeur est conforme avec le critère de conformité, générer des paramètres (P, A, B) tels que chaque paramètre (P, A, B) a pour valeur la valeur conforme avec ledit au moins un critère de conformité.

**10.** Appareil électronique de cryptage ou de décryptage (5) utilisant un protocole cryptographique, le protocole cryptographique étant **caractérisé par** au moins un paramètre (P, A, B) généré via le dispositif électronique de génération (10) selon la revendication précédente.

## FIG.1

## FIG.2

Europäisches
Patentamt

European
Patent Office

Office européen
des brevets

# RAPPORT DE RECHERCHE EUROPEENNE

Numéro de la demande

EP 19 19 2215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DANIEL J BERNSTEIN ET AL: "How to manipulate curve standards: a white paper for the black hat", INTERNATIONAL ASSOCIATION FOR CRYPTOLOGIC RESEARCH,, vol. 20150927:155915, 27 septembre 2015 (2015-09-27), pages 1-44, XP061019522, * abrégé * * section 2, paragraph 2 * * section 3.1 * * section 4 * * section 5 * * section 6 * * section 8 * ----- | 1-10 | INV. H04L9/00 H04L9/30 H04L9/32 |
| X,D | FR 3 053 862 A1 (THALES SA [FR]) 12 janvier 2018 (2018-01-12) * pages 1-3,6,7 * ----- | 1-10 | |
| A | JOSEPH BONNEAU ET AL: "On Bitcoin as a public randomness source", INTERNATIONAL ASSOCIATION FOR CRYPTOLOGIC RESEARCH,, vol. 20151019:205945, 19 octobre 2015 (2015-10-19), pages 1-32, XP061019175, * abrégé * * section 2.2 * * section 3.2 * ----- -/-- | 1-10 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 28 août 2019 | Yamajako-Anzala, A |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................
& : membre de la même famille, document correspondant

EPO FORM 1503 03.82 (P04C02)

page 1 de 2

EP 3 614 617 A1

Europäisches
Patentamt

European
Patent Office

Office européen
des brevets

**RAPPORT DE RECHERCHE EUROPEENNE**

Numéro de la demande

EP 19 19 2215

**DOCUMENTS CONSIDERES COMME PERTINENTS**

| Catégorie | Citation du document avec indication, en cas de besoin, des parties pertinentes | Revendication concernée | CLASSEMENT DE LA DEMANDE (IPC) |
|---|---|---|---|
| A | THOMAS BAIGN GBP ERES ET AL: "Trap Me If You Can -- Million Dollar Curve", INTERNATIONAL ASSOCIATION FOR CRYPTOLOGIC RESEARCH,, vol. 20160201:145717, 1 janvier 2016 (2016-01-01), pages 1-35, XP061019906, * abrégé * * section 1 * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 28 août 2019 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 19 19 2215

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-08-2019

| Document brevet cité au rapport de recherche | Date de publication | Membre(s) de la famille de brevet(s) | Date de publication |
|---|---|---|---|
| FR 3053862 A1 | 12-01-2018 | EP 3482524 A1<br>FR 3053862 A1<br>SG 11201900169V A<br>WO 2018007645 A1 | 15-05-2019<br>12-01-2018<br>27-02-2019<br>11-01-2018 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3053862 A1

**Littérature non-brevet citée dans la description**

- Post-quantum key exchange for the TLS protocol from the ring learning with errors problem. *proceedings de la conférence IEEE Symposium on Security and Privacy (S&P),* 2015